Europäisches Patentamt

European Patent Office

Office européen des brevets

(19)

(11) Numéro de publication : **0 357 494 B1**

(12) **FASCICULE DE BREVET EUROPEEN**

(45) Date de publication du fascicule du brevet :
**03.06.92 Bulletin 92/23**

(51) Int. Cl.$^5$ : **F02K 1/70, F02K 1/62**

(21) Numéro de dépôt : **89402339.9**

(22) Date de dépôt : **24.08.89**

(54) Inverseur de poussée pour moteur à réaction de type à portes équipées de volets auxiliaires.

(30) Priorité : **29.08.88 FR 8811325**

(43) Date de publication de la demande :
**07.03.90 Bulletin 90/10**

(45) Mention de la délivrance du brevet :
**03.06.92 Bulletin 92/23**

(84) Etats contractants désignés :
**DE GB**

(56) Documents cités :
**EP-A- 0 310 497
FR-A- 2 348 371
US-A- 3 570 767
US-A- 3 605 411**

(73) Titulaire : **SOCIETE DE CONSTRUCTION DES
AVIONS HUREL-DUBOIS (société anonyme)
39 à 43 rue Grange Dame Rose
F-92360 Meudon-la-Foret (FR)**

(72) Inventeur : **Schegerin, Robert
4, chemin du Vallot
F-78350 Jouy en Josas (FR)**
Inventeur : **Laboure, Bernard
1, rue Maryse Bastié
F-78140 Velizy (FR)**
Inventeur : **Standish, Robert
32, rue du Gateau
F-78120 Gazeran (FR)**

(74) Mandataire : **Sauvage, Renée
Cabinet Sauvage 100 bis, avenue de
Saint-Mandé
F-75012 Paris (FR)**

## Description

La présente invention concerne un inverseur de poussée à portes de moteur à réaction, dans lequel l'inverseur est destiné à dévier tout ou partie du jet propulsif lorsqu'une commande en mode reverse est désirée.

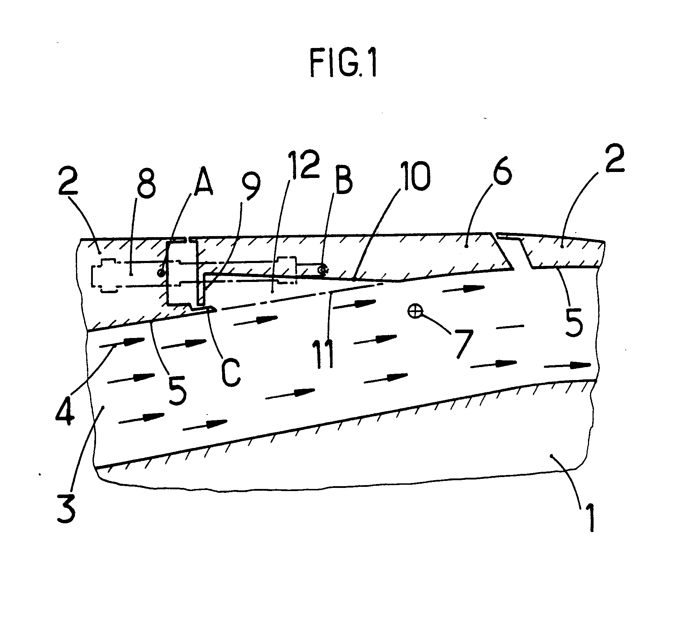

Ce type d'inverseur est bien connu et l'on sait que les portes basculantes s'intègrent, en position fermée, dans un capotage extérieur délimitant le canal de circulation du jet en mode de fonctionnement direct, tandis qu'elles basculent, sous l'effet de vérins, en position d'inversion transversalement au canal pour dévier tout ou partie du jet. Pour faciliter la déviation du jet ces portes présentent un déflecteur frontal fixe qui fait saillie par rapport à la paroi interne de la porte. En raison de la configuration des moteurs équipés de ces inverseurs, que l'on a représenté pour illustration à la figure 1 des dessins annexés, en position de portes fermées ou position de croisière la partie amont des parois internes des portes se trouve décalée par rapport à la paroi extérieure du canal en constituant ainsi une zone en dépression qui peut perturber la circulation de la veine du jet en entraînant un surcroît de consommation de carburant.

La présente invention concerne une solution pour remédier à cet inconvénient consistant dans ce fait que chaque porte est équipée d'au moins un volet auxiliaire monté du côté radialement interne de la porte et qui, en position de porte fermée, vient se placer dans l'alignement de la paroi extérieure du canal en suivant ainsi la surface théorique de délimitation aérodynamique de la veine du jet, tandis qu'en position de porte ouverte, ledit volet s'efface contre la partie amont en retrait de la porte en dégageant ainsi le déflecteur frontal.

Des solutions de ce type ont déjà été proposées, voir par exemple US-A-3 605 411, mais elles sont mécaniquement complexes et entrainent une augmentation de poids non négligeable de l'ensemble de la structure et donc ne permettent pas de bénéficier des gains de consommation de carburant entraîné par la présence du volet.

L'invention se caractérise par l'adoption d'une structure mécanique très simple, légère et totalement efficace. A cet effet, le volet auxiliaire est articulé à son extrémité aval autour d'un axe fixe solidaire de la paroi interne de la porte et il est sollicité élastiquement, par exemple par un ressort, dans sa position effacée contre la porte. Un levier articulé à la porte et dont une extrémité coopère avec la volet amène automatiquement celui-ci dans sa position alignée avec la paroi extérieure du canal annulaire, en position de porte fermée, grâce à la coopération de l'autre extrémité du levier avec une butée portée par la partie fixe due moteur.

Selon l'invention, l'extrémité amont du volet comporte une fente de guidage dans laquelle est engagé de façon mobile un axe prévu à l'extrémité du levier articulé à la porte, ladite fente présentant avantageusement une configuration sensiblement arquée dont la convexité est orientée vers la porte.

De préférence, le ressort de rappel élastique du volet est un ressort spiral agissant entre le levier et une partie fixe de la porte.

Afin de permettre un ajustement de la position du volet en position de porte fermée, la butée sur laquelle prend appui le levier est réglable en hauteur.

Enfin, on notera que chaque porte pourra être équipée d'un seul volet occupant toute la largeur de la porte ou de deux volets séparés.

On décrira à présent, à titre d'exemple non limitatif une forme de réalisation préférée de l'invention en référence aux dessins annexés dans lesquels :

la figure 1 est un schéma illustrant une porte d'inverseur connue en position fermée non équipée de volet auxiliaire

les figures 2 et 3 représentent schématiquement la cinématique d'une porte d'un inverseur avec volet auxiliaire selon l'invention, respectivement en position de porte fermée et de porte ouverte

la figure 4 représente schématiquement, en élévation, une porte selon l'invention équipée de deux volets

la figure 5 représente une porte avec volet selon l'invention

la figure 6 montre le détail de commande du volet, en position de porte fermée

la figure 7 montre le volet en position de porte ouverte

les figures 8, 9 et 10 représentent une variante de réalisation dans laquelle la porte est équipée d'un seul volet.

Dans la description qui suit, ainsi que dans les dessins, il sera question exclusivement de l'adaptation de l'invention à un inverseur à portes destiné à équiper un moteur du type à double flux et dans lequel la déviation du jet intéresse seulement le flux secondaire froid circulant dans un canal annulaire entourant la structure du moteur qui émet le flux chaud.

On comprendra cependant que l'invention s'appliquera de la même façon à un inverseur équipant un moteur à double flux dont les portes basculantes seraient situées en aval de la tuyère d'éjection des gaz chauds. Une telle adaptation à la portée d'un simple technicien doit être considéré comme appartenant à la présente invention.

Comme on l'a déjà indiqué, on a représenté à la figure 1 une porte d'inverseur classique non équipée de volet auxiliaire. Dans cette figure, dont l'aspect général sera utilisé pour décrire l'invention, on a désigné en 1 la partie axiale du moteur dans laquelle circule le flux primaire chaud et en 2 le capotage extérieur du moteur qui ménage avec la partie 1 un canal annulaire 3 pour la circulation du flux froid secondaire provenant par exemple d'une soufflante située à l'avant du moteur et circulant selon les flèches 4. La paroi extérieure du canal annulaire est délimitée par la surface interne 5 du capotage 2. Des portes basculantes dont une est représentée en 6 sont montées dans des ouvertures du capotage, leur axe d'articulation étant schématisé en 7. La commande de chaque porte 6 est réalisée par un vérin 8 articulé en A à la structure fixe 2 et en B à la porte. A l'avant, la porte 6 présente un déflecteur frontal 9 qui en position de porte fermée vient en appui contre une avancée C du capotage. La paroi interne amont 10 de la porte est en retrait par rapport au déflecteur. On voit donc nettement, qu'en raison de cette configuration classique, lorsque la porte est fermée, cette partie amont 10 n'est pas alignée avec la surface interne 5 le long de laquelle circule le flux froid et dont on a schématisé en 11 le prolongement au droit de la porte. De ce fait, entre la poutre 10 de la porte et cette ligne 11, il existe un espace 12 perturbant l'écoulement de la veine fluide 4.

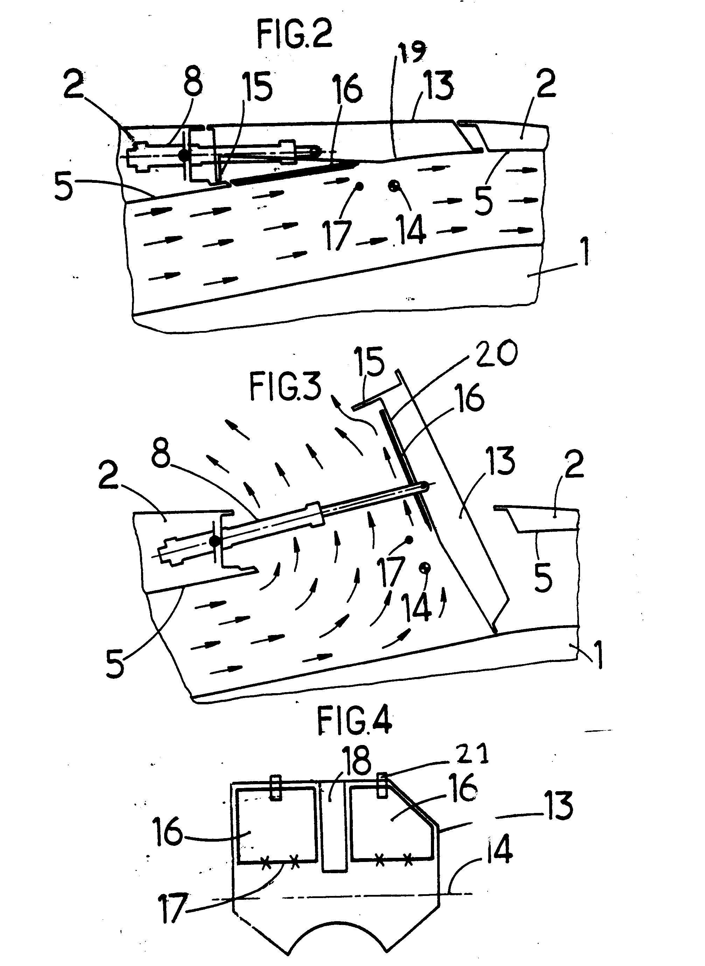

Quant on équipe la porte, comme dans le cas de l'invention d'un ou plusieurs volets auxiliaires, on aboutit à la configuration des figures 2 à 4. Dans cette forme de réalisation, étant donné la présence du vérin 8 dans l'axe médian de la porte 13, celle-ci comporte dans sa partie amont une saignée 18 appelée tunnel de vérin permettant le logement de celui-ci en position de porte fermée. On a donc prévu deux volets auxiliaires 16 symétriques par rapport au tunnel 18 (figure 4), chacun des volets étant articulé à la porte autour d'axes 17. On voit qu'en position de porte fermée, sans modifier le déflecteur frontal 15, les volets 16 viennent coincider avec la ligne 11 de la figure 1 en reconstituant parfaitement la géométrie régulière de la surface extérieure de la veine fluide (figure 2). Les volets sont alors dans le prolongement de la partie arrière 19 de porte. En revanche, en position de porte ouverte (figure 3), les volets 16 s'escamotent contre la partie amont 20 de la porte de façon à dégager complètement le déflecteur 15.

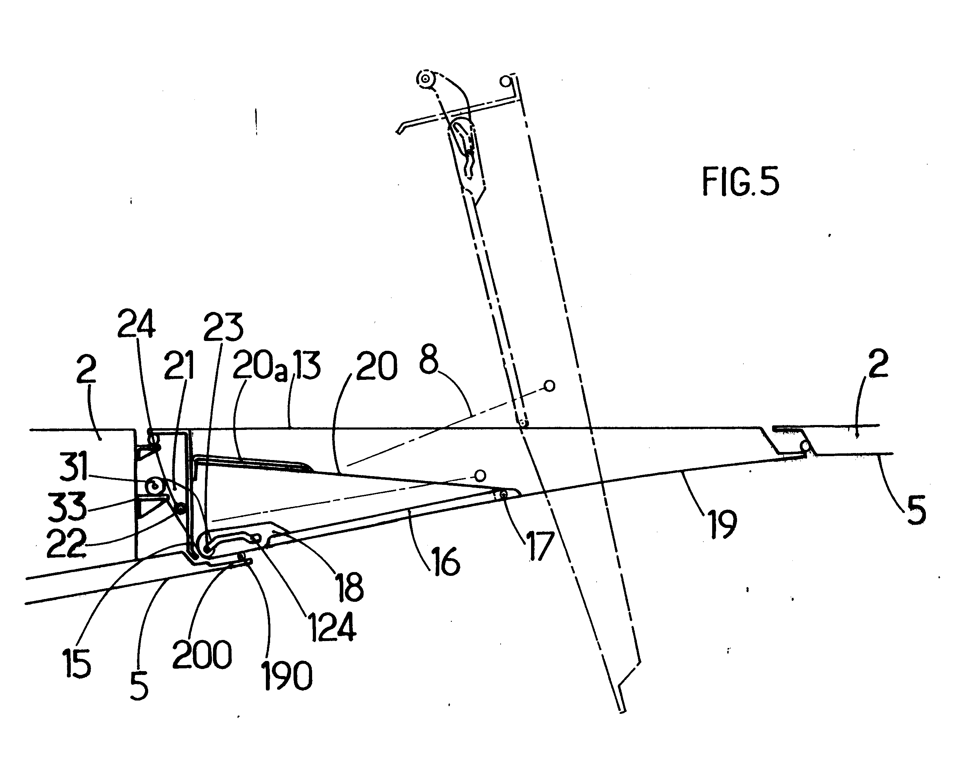

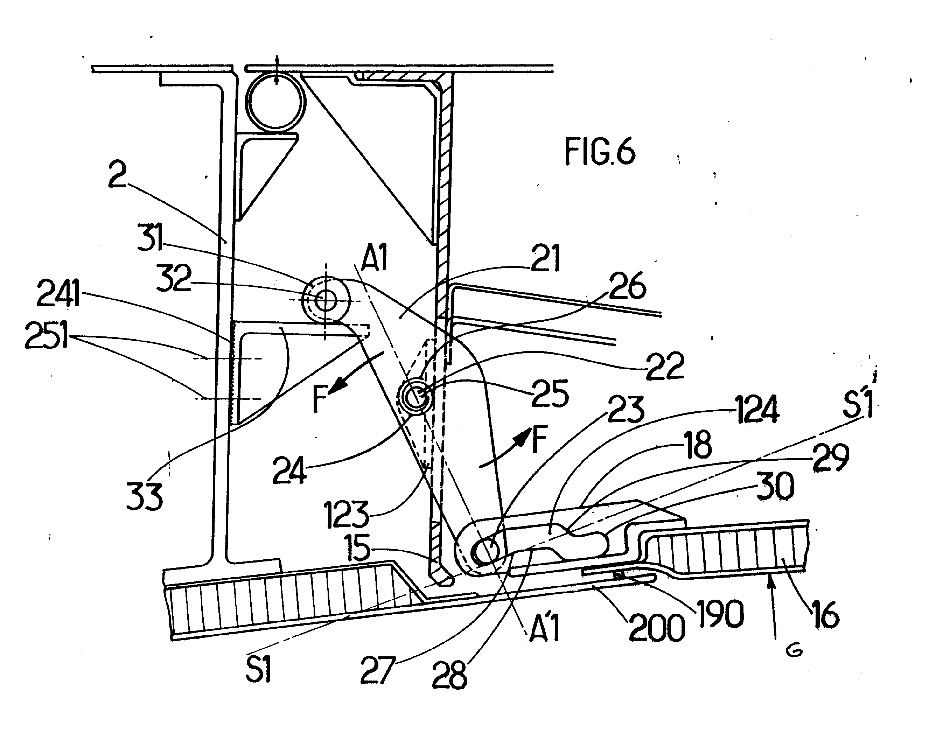

On décrira à présent, en référence aux figures 5 et 6 le mécanisme de commande des volets. A l'extrémité amont du volet 16 est prévue une pièce 18 destinée à venir en appui, en position de porte fermée, contre un joint 190 équipant l'avancée 200 constituant le bord du puits de déviation le long duquel la veine fluide est déviée en mode réverse. Cette pièce 18 présente une fente de guidage 124 dans laquelle est engagée de façon glissante un axe 23 porté à l'extrémité d'un levier coudé 21 articulé autour d'un axe 22 tournant dans un palier 123 fixé contre la face extérieure du déflecteur 15.

Un ressort spiral 24 entourant l'axe 22 est amené à une extrémité en 26 sur le palier et à son autre extrémité en 25 sur l'axe 22 de telle sorte que ledit ressort exerce sur le levier 21 un couple de rappel élastique dans le sens de la flèche F. L'extrémité libre du levier porte par exemple un galet 31 tournant fou autour d'un axe 32, ce galet pouvant être remplacé par une pièce sphérique ou par tout autre organe permettant un contact glissant contre une butée 33 fixée par vis 251 à la structure 2 du capotage.

On notera que la butée 33 peut avantageusement être réglable en hauteur par coopération de faces striées 241 prévues sur la semelle de la butée et sur son support.

Lorsque la porte est en position ouverte, le levier est sollicité par son ressort dans la position en trait interrompu de la figure 5 et l'axe 23, glissant dans la fente 124, rabat le volet automatiquement contre la porte 13. A cet effet, un logement 20a pour la pièce 18 est prévu dans la paroi interne 20 de la porte. On notera la forme sensiblement arquée de la fente dont la convexité fait face à la porte, avec ses parties 27 et 29 inclinées et ses parties 28 et 30 rectilignes. Lorsque le vérin 8 ramène la porte vers sa position fermée, vers la fin du mouvement, le galet 31 prend contact avec la butée 33, ce qui entraine le basculement du levier contre l'action du ressort 24 et l'écartement du volet par rapport à la porte. En position de porte fermée, on notera que l'action du vérin 8 sur la porte assure, par l'intermédiaire du levier 21, le blocage du volet 16 en position d'appui contre la partie 200.

De plus, un verrouillage du volet dans sa position de la figure 6 est obtenu par la géométrie du levier 21 et de la fente 124. En effet, la surface S1-S'1 de la partie avant inclinée 27 de la fente est telle que dans la position de la figure 6, elle est sensiblement perpendiculaire à la ligne A1-A'1 joignant les axes 22 et 23 du levier. Grâce à cette disposition, on obtient par appui de l'axe 23 sur la partie 27 un auto-coincement du mécanisme et tous les efforts notamment aérodynamiques, qui s'exercent selon la flèche G sur le volet (et qui pourraient tendre à la faire vibrer) sont absorbés directement dans la porte sans interférer avec le couple de rappel du ressort 24 ni créer une force d'appui f du galet 31 sur la butée qui soit trop importante.

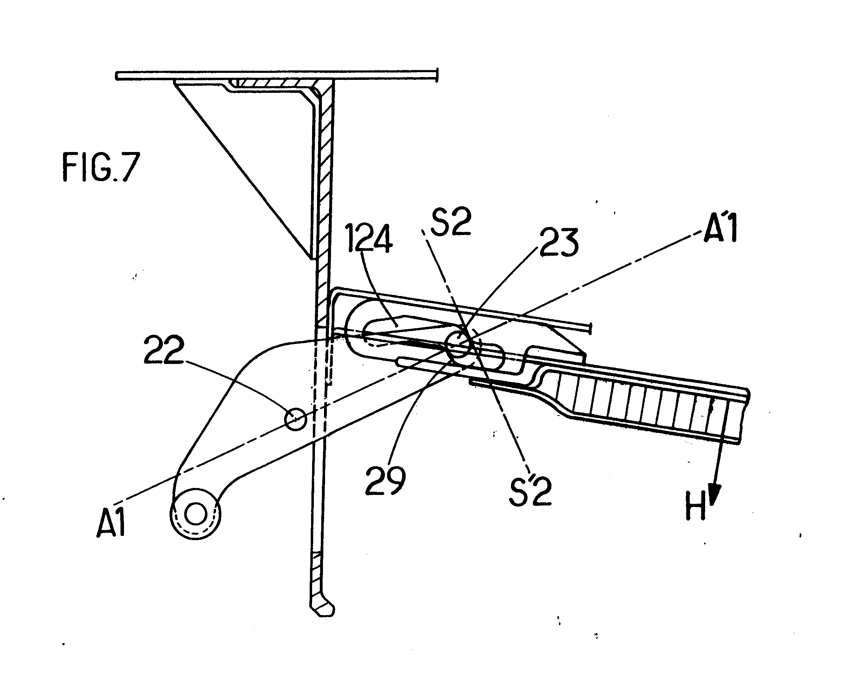

De même, en position de porte ouverte, cette géométrie levier-fente assure une stabilité du volet, comme on l'a représenté à la figure 7. En effet, dans cette position, la ligne A1-A'1 passant par les axes 22 et 23 du levier est sensiblement perpendiculaire à la surface S2 S'2 de la poutre arrière inclinée 29 de la fente 124 sur laquelle prend appui l'axe 23. Ainsi un effort statique ou vibratoire s'exerçant par exemple selon la flèche M sur le volet sera repris directement par la porte grâce à l'auto-coincement et au verrouillage du mécanisme sans création de couple de rappel et sans sollicitation sur le ressort de rappel du levier.

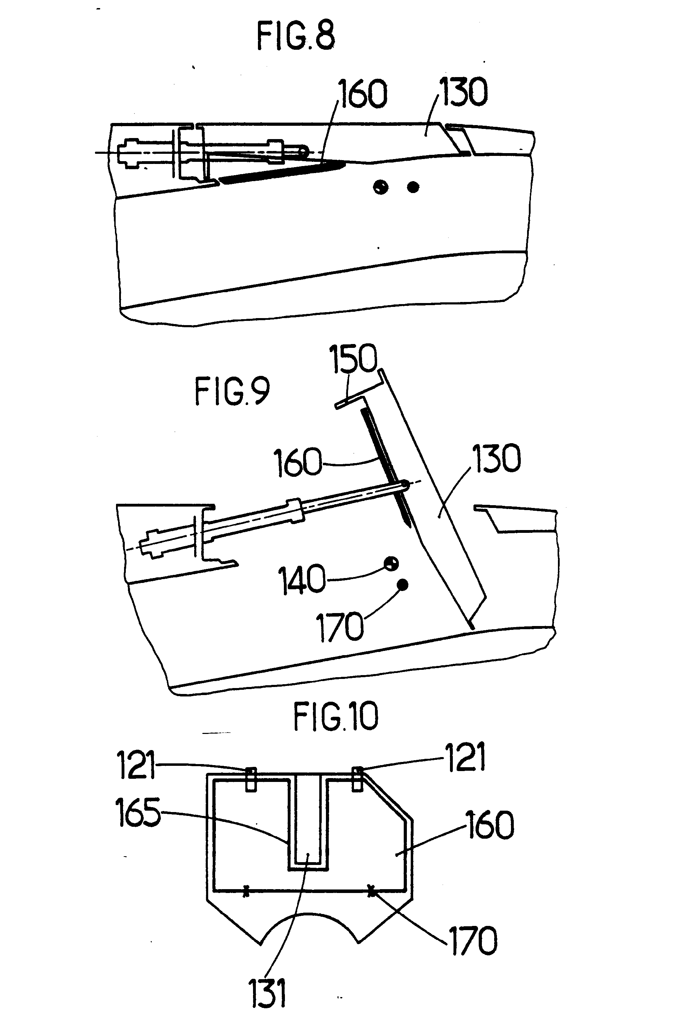

Dans le cas des figures 8 à 10, on utilise, en variante, un seul volet 160 par porte, ce volet étant articulé en 170 autour d'axes situés plus en aval que dans la forme de réalisation précédente. La porte 130 pivote autour de l'axe 140, tandis que le volet unique 160 pivote autour des axes 170. Le déflecteur 150 est identique à celui du cas précédent. Pour permettre le passage du vérin, la porte présente un tunnel 131 et le volet une découpe rectangulaire 165.

On a représenté en 121 schématiquement deux leviers de commande du volet similaires au levier 21 de la forme de réalisation précédente.

## Revendications

1. Inverseur de poussée à portes basculantes pour moteur à réaction muni d'un capotage extérieur délimitant un canal de circulation de jet de propulsion, les portes basculantes de l'inverseur s'intégrant, en position fermée, dans ledit capotage et basculant sous l'effet de vérins, en position d'inversion , transversalement au canal pour dévier le jet de propulsion, lesdites portes étant du type à déflecteur frontal et présentant une partie amont en retrait par rapport au déflecteur frontal de sorte qu'en position fermée, cette partie amont est décalée par rapport à la paroi extérieure du canal en constituant ainsi une zone en dépression, chacune des portes présentant au moins un volet auxiliaire monté du côté radialement interne de la porte qui, en position de porte fermée, vient se placer dans l'alignement de la paroi extérieure du canal en suivant la surface théorique de délimitation aérodynamique de la veine jet, tandis qu'en position de porte ouverte, ledit volet s'efface contre la partie amont en retrait de la porte en dégageant ainsi le déflecteur frontal, ledit inverseur étant caractérisé en ce que

ledit volet (16) est articulé à son extrémité aval autour d'un axe fixe (17) solidaire de la paroi interne (20) de la porte (13), et il est sollicité élastiquement par un ressort (24) dans sa position effacée contre la porte, tandis qu'il est amené dans sa position alignée avec la paroi (5) extérieure du canal par l'action d'un levier (21) articulé à la porte et dont une extrémité (23) coopère avec le volet (16) tandis que son extrémité opposée (31) coopère, en position de porte fermée, avec une butée (33) portée par la partie fixe du moteur.

2. Inverseur selon la revendication 1 dans lequel l'extrémité amont du volet comporte une fente (124) de guidage dans laquelle est logé de façon mobile un axe (23) prévu à l'extrémité du levier articulé à la porte.

3. Inverseur selon l'une quelconque des revendications 1 ou 2 caractérisé en ce que l'extrémité opposée du levier est munie d'un organe (31) capable d'entrer en contact glissant avec la butée fixe (33).

4. Inverseur selon l'une quelconque des revendications 1 à 3 caractérisé en ce que le ressort de rappel élastique (24) du volet est un ressort spiral agissant entre une partie solidaire de la porte et le levier (21).

5. Inverseur selon l'une quelconque des revendications 2 à 4 caractérisé en ce que la fente de guidage (124) présente une configuration sensiblement arquée dont la convexité est tournée vers la porte.

6. Inverseur selon les revendications 2 et 5 caractérisé en ce que la partie amont (27) de la fente (124) présente un plan d'appui (S1-S'1) pour l'axe (23) de l'extrémité du levier plan d'appui qui en position de porte fermée, est sensiblement perpendiculaire à une ligne (A1-A'1) joignant l'axe (23) à l'axe (22) de rotation du levier.

7. Inverseur selon les revendications 2 et 5 caractérisé en ce que la partie aval (29) de la fente (124) présente un plan d'appui (S2-S'2) pour l'axe (23) de l'extrémité du levier, plan d'appui qui, en position ouverte de la porte, est sensiblement perpendiculaire à la ligne (A1-A'1) joignant ledit axe (23) de l'extrémité du levier et l'axe (22) de rotation du levier.

8. Inverseur selon l'une quelconque des revendications précédentes caractérisé en ce que la butée (33) sur laquelle vient prendre appui le levier est réglable en hauteur.

9. Inverseur selon l'une quelconque des revendications précédentes caractérisé en ce que chaque porte est équipée d'un seul volet occupant sensiblement toute la largeur de la porte.

10. Inverseur selon l'une quelconque des revendications 1 à 5 caractérisé en ce que chaque porte est équipée de deux volets séparés articulés respectivement à la porte et équipés chacun d'au moins un levier de commande et d'un ressort de rappel élastique.

## Patentansprüche

1. Schubumkehrvorrichtung mit Klapptüren für einen Strahlmotor mit einer äußeren Verkleidung, die einen Umlaufkanal für den Treibstrahl abgrenzt, wobei die Klapptüren der Umkehrvorrichtung in geschlossener Stellung in die Verkleidung integriert sind und unter der Einwirkung von Arbeitszylindern in die Umkehrstellung quer zum Kanal gebracht werden, um den Treibstrahl abzulenken, und einen Frontablenker und einen eingangsseitigen Teil besitzen, der bezüglich des Frontablenkers zurückversetzt ist, so daß er in der geschlossenen Stellung bezüglich der äußeren Wand des Kanals versetzt ist und dadurch eine Unterdruckzone bildet, wobei jede der Türen wenigstens eine Hilfsklappe besitzt, die auf der radial inneren Seite der Tür montiert ist und bei geschlossener Tür mit der äußeren Wand des Kanals in Flucht kommt, indem sie der theoretischen ärodynamischen Abgrenzungsfläche des Düsenstrahls folgt, während die Klappe bei geöffneter Tür an den zurückversetzten eingangsseitigen Teil der Tür herangeklappt ist und damit den Frontablenker freilegt, dadurch gekennzeichnet,

daß die Klappe (16) an ihrem ausgangsseitigen Ende an einer feststehenden, mit der inneren Wand (20) der Tür (13)fest verbundenen Achse (17) angelenkt ist und elastisch durch eine Feder (24) in Richtung auf ihre an die Tür herangeklappte Stellung beaufschlagt wird, während sie in ihre mit der äußeren Wand (5) des Kanals fluchtende Stellung durch die Einwirkung eines an der Tür angelenkten Hebels (21) gebracht wird, von dem ein Ende (23) mit der Klappe (16) zusammenenwirkt, während sein entgegengesetztes Ende (31) bei geschlossener Tür mit einem von dem feststehenden Teil des Motors getragenen Anschlag (33) zusammenwirkt.

2. Umkehrvorrichtung nach Anspruch 1, bei der das eingangsseitige Ende der Klappe einen Führungsschlitz (124) besitzt, in dem beweglich eine Achse (23) sitzt, die am Ende des an der Tür angelenkten Hebels vorgesehen ist.

3. Umkehrvorrichtung nach einem der Ansprüche 1 oder 2, dadurch gekennzeichnet, daß das entgegengesetzte Ende des Hebels mit einem Organ (31) versehen ist, das mit dem feststehenden Anschlag (33) in Gleitkontakt kommen kann.

4. Umkehrvorrichtung nach einem der Ansprüche 1 bis 3, dadurch gekennzeichnet, daß die Feder (24) zur elastischen Rückholung der Klappe eine Spiralfeder ist, die zwischen einem mit der Tür fest verbundenen Teil und dem Hebel (21) wirkt.

5. Umkehrvorrichtung nach einem der Ansprüche 2 bis 4, dadurch gekennzeichnet, daß der Führungsschlitz (124) eine im wesentlichen gekrümmte Ausformung besitzt, deren Konvexität der Tür zugewandt ist.

6. Umkehrvorrichtung nach den Ansprüchen 2 und 5, dadurch gekennzeichnet, daß der eingangsseitige Teil (27) des Schlitzes (124) eine Auflageebene (S1-S'1) für die Achse (23) am Hebelende besitzt, wobei diese Auflageebene bei geschlossener Tür zu einer Linie (A1-A'1), die die Achse (23) mit der Drehachse (22) des Hebels verbindet, ungefähr senkrecht ist.

7. Umkehrvorrichtung nach den Ansprüchen 2 und 5, dadurch gekennzeichnet, daß der ausgangsseitige Teil (29) des Schlitzes (124) eine Auflageebene (S2-S'2) für die Achse (23) am Hebelende besitzt, wobei diese Auflageebene bei geöffneter Tür zu der Linie (A1-A'1), die die Achse (23) am Hebelende mit der Drehachse (22) des Hebels verbindet, ungefähr senkrecht ist.

8. Umkehrvorrichtung nach einem der vorhergehenden Ansprüche, dadurch gekennzeichnet, daß der Anschlag (33), an dem der Hebel zum Anliegen kommt, höhenverstellbar ist.

9. Umkehrvorrichtung nach einem der vorhergehenden Ansprüche, dadurch gekennzeichnet, daß jede Tür mit einer einzigen Klappe ausgerüstet ist, die im wesentlichen die ganze Breite der Tür einnimmt.

10. Umkehrvorrichtung nach einem der Ansprüche 1 bis 5, dadurch gekennzeichnet, daß jede Tür mit zwei getrennten Klappen ausgerüstet ist, die an der Tür angelenkt sind und jeweils mit wenigstens einem Betätigungshebel und einer Feder zur elastischen Rückholung versehen sind.

## Claims

1. A thrust reverser with tilting doors for a jet engine, equipped with an external cowling delimiting a flow channel for the propulsion jet, the tilting doors of the reverser, in the closed position, being incorporated in the said cowling and, in the reversal position, tilting under the effect of jacks transversely relative to the channel in order to deflect the propulsion jet, the said doors being the type with a front deflector and having an upstream part setback relative to the front deflector, in such a way that, in the closed position, this upstream part is offset relative to the outer wall of the channel, thus forming a vacuum zone, each of the doors having at least one auxiliary flap which is mounted on the radially inner side of the door and which, in the closed-door position, assumes its place in alignment with the outer wall of the channel, following the theoretical surface of aerodynamic delimitation of the jet stream, whilst, in the open-door position, the said flap is retracted against the setback upstream part of the door, thus exposing the front deflector, the said reverser being defined in that the said flap (16), at its downstream end, is articulated about a stationary axle (17) fixed to the inner wall (20) of the door (13), and it is stressed elastically by means of a spring (24) into its position retracted against the door, whilst it is brought into its position aligned with the outer wall (5) of the channel as a result of the action of the lever (21) which is articulated on the door and one end (23) of which interacts with the flap (16), whilst its opposite end (31) interacts, in the closed-door position, with a stop (33) carried by the stationary part of the engine.

2. A reverser as claimed in claim 1, wherein the upstream end of the flap has a guide slot (124), in which is seated movably an axle (23) located at the end of the lever articulated on the door.

3. A reverser as claimed in either one of claims 1 and 2, wherein the opposite end of the lever is equipped with a member (31) capable of coming in sliding contact with the stationary stop (33).

4. A reverser as claimed in any one of claims 1 to 3, wherein the elastic return spring (24) of the flap is a helical spring acting between a part fixed to the door and the lever (21).

5. A reverser as claimed in any one of claims 2 to 4, wherein the guide slot (124) has a substantially arcuate configuration, the convexity of which faces the door.

6. A reverser as claimed in claims 2 and 5, wherein the upstream part (27) of the slot (124) has a bearing plane (S1-S'1) for the axle (23) of the end of the lever, and this bearing plane, in the closed-door position, is substantially perpendicular to a line (A1-A'1) joining the axle (23) to the rotary axle (22) of the lever.

7. A reverser as claimed in claims 2 and 5, wherein the downstream part (29) of the slot (124) has a bearing plane (S2-S'2) for the axle (23) of the end of the lever, and this bearing plane, in the open position of the door, is substantially perpendicular to the line (A1-A'1) joining said axle (23) located at the end of the lever and the rotary axle (22) of the lever.

8. A reverser as claimed in any one of the preceding claims, wherein the stop (33) on which the lever comes to bear is vertically adjustable.

9. A reverser as claimed in any one of the preceding claims, wherein each door is equipped with a single flap occupying substantially the entire width of the door.

10. A reverser as claimed in any one of claims 1 to 5, wherein each door is equipped with two separate flaps articulated respectively on the door and each equipped with at least one control lever and with an elastic return spring.

# FIG.1

FIG.2

FIG.3

FIG.4

FIG.5

EP 0 357 494 B1

FIG.6

FIG.7

124   S2   23   A'1

22

29   S2   H

A1

EP 0 357 494 B1

EP 0 357 494 B1

## FIG.8

## FIG.9

## FIG.10

12